# EUROPÄISCHE PATENTANMELDUNG

(11) **EP 2 924 957 A1**
(43) Veröffentlichungstag der Anmeldung: **30.09.2015**
(21) Anmeldenummer: 14161404.0
(22) Anmeldetag: 25.03.2014
(51) Int. Cl.: H04L 29/12, H04L 29/08

(54) **Verfahren zur Konfiguration eines Kommunikationsgeräts innerhalb eines industriellen Automatisierungssystems und Kommunikationsgerät**

(71) Anmelder: Siemens Aktiengesellschaft, 80333 München (DE)
(72) Erfinder: Albrecht, Harald, 90475 Nürnberg (DE)

(57) **Zusammenfassung**

Zur Adresskonfiguration eines Kommunikationsgeräts innerhalb eines industriellen Automatisierungssystems wird überprüft, ob dem Kommunikationsgerät bereits eine manuell konfigurierte oder mittels DHCPv6 zugewiesene IPv6-Adresse zugeordnet ist. Bei einem positiven Überprüfungsergebnis wird weiter überprüft, ob ein für das Kommunikationsgerät konfigurierter IPv6-Default-Gateway erreichbar und ein dem Kommunikationsgerät zugeordnetes IPv6-Präfix an das Kommunikationsgerät übermittelt ist. Ist kein IPv6-Default-Gateway erreichbar und kein zugeordnetes IPv6-Präfix übermittelt, Im Testbetrieb erzeugt das Kommunikationsgerät selbstständig ein on-link IPv6-Präfix, das bei einem Verlassen des Testbetriebs wieder automatisch entfernt wird.

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus US 2005 0041671 A1 ist ein Kommunikationssystem mit zumindest einem ersten und zweiten Router bekannt, bei dem der zweite Router zumindest ein IPv6-Adresspräfix vom ersten Router anfordert. Dabei umfasst der erste Router eine Speichereinheit für IPv6-Adresspräfixe, von denen ein zumindest IPv6-Adresspräfix auf Anforderung des zweiten Routers bekanntgegeben wird. Der zweite Router umfasst eine Einheit zur Erzeugung eines weiteren IPv6-Adresspräfixes auf Basis des durch den ersten Router bekanntgegebenen IPv6-Adresspräfixes. Der weitere IPv6-Adresspräfix wird von einem an den zweiten Router angeschlossenen Kommunikationsgerät zur Erzeugung einer IPv6-Adresse verwendet und hierzu durch den zweiten Router bekanntgegeben.

In EP 1 770 458 A2 ist ein industrielles Automatisierungssystem mit zumindest einer speicherprogrammierbaren Steuerungseinheit beschrieben, bei dem eine Konfigurationseinheit zur Konfiguration der Steuerungseinheit und zur Bekanntgabe ihrer Verfügbarkeit an einem Kommunikationsnetz vorgesehen ist. Die Konfigurationseinheit weist der Steuerungseinheit dabei eine eindeutige Kommunikationsnetzadresse zu, die beispielsweise eine IPv6-Adresse sein kann. Auf diese Weise kann die Steuerungseinheit automatisch in Betrieb genommen werden.

US 8 194 661 B2 offenbart ein Verfahren zur automatischen Konfiguration eines Kommunikationsgeräts innerhalb eines segmentierten Kommunikationsnetzes, bei dem durch eine Überwachungseinheit überprüft wird, ob ein empfangenes IPv6-Datenpaket eine Router-Bekanntgabe (Router Advertisement) oder eine Router-Abfrage (Router Solicitation) umfasst. Im Fall einer Router-Abfrage wird eine MAC-Absender-Adresse des Datenpakets durch die Überwachungseinheit aus dem IPv6-Datenpaket entfernt. Außerdem wird durch die Überwachungseinheit eine externe MAC-Adresse in das IPv6-Datenpaket eingefügt, um dieses als Multicast-Nachricht an einem Router weiterzuleiten. Bei einer Router-Bekanntgabe entfernt die Überwachungseinheit eine MAC-Router-Adresse aus dem IPv6-Datenpaket und fügt stattdessen eine interne MAC-Adresse in das IPv6-Datenpaket ein, um dieses als Unicast-Nachricht an das zu konfigurierende Kommunikationsgerät weiterzuleiten.

In DE 10 2011 088161 A1 wird ein Verfahren zum Betriebs eines IPv6-Kommunikationsnetzes beschrieben, bei dem einem jeweiligen Kommunikationsgerät eine Ortsinformation zugeordnet wird, die in eine dem Kommunikationsgerät zugeordnete Kommunikationsnetzadresse eingefügt wird. Dies kann beispielsweise auf Basis von DHCPv6 implementiert werden. Mittels Ortsinformationen umfassender Kommunikationsnetzadressen können Kommunikationsgeräte aufwandsarm lokalisiert und lokal angesteuert werden.

Aus US 2013 0238769 A1 ein Verfahren zur dynamischen Erfassung von Konfigurationsinformationen durch einen Server innerhalb eines IPv6-Kommunikationsnetzes bekannt, bei dem Nachrichten mit Nachbar-Abfragen (Neighbour Solicitation) hinsichtlich Absender-Geräteidentifikatoren und zugeordneten IPv6-Adressen ausgewertet werden. Auf Basis dessen wird eine Datenbank mit einer Zuordnung zwischen Geräteidentifikatoren und IPv6-Adressen erstellt, wobei die Zuordnung an den Server übermittelt wird. Durch den Server kann diese Zuordnung zur Erkennung mehrfach zugewiesener IPv6-Adressen genutzt werden.

Bei einem Test- bzw. Inselbetrieb von Anlagenkomponenten eines industriellen Automatisierungssystems ist eine Verwendung eines Routers häufig unerwünscht bzw. nicht möglich. Grundsätzlich könnten für einen Testbetrieb manuell erstellte IPv6-Präfixe verwendet werden, die nach dem Testbetrieb aus einer Konfiguration der jeweiligen Anlagenkomponente zu löschen sind. Dies ist jedoch gleichermaßen aufwendig und fehleranfällig.

Der vorliegenden Erfindung liegt die Aufgabe zugrunde, ein Verfahren zur Konfiguration eines IPv6-Kommunikationsgeräts für einen Testbetrieb ohne Router anzugeben sowie ein entsprechendes Kommunikationsgerät zu schaffen.

Diese Aufgabe wird erfindungsgemäß durch ein Verfahren mit den in Anspruch 1 angegebenen Merkmalen und durch ein Kommunikationsgerät mit den in Anspruch 8 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Adresskonfiguration eines Kommunikationsgeräts innerhalb eines industriellen Automatisierungssystems wird zunächst eine erste Überprüfung durchgeführt, ob dem Kommunikationsgerät bereits eine manuell konfigurierte oder mittels DHCPv6 (Dynamic Host Configuration Protocol) zugewiesene IPv6-Adresse zugeordnet ist. Ist eine manuell konfigurierte oder mittels DHCPv6 zugewiesene IPv6-Adresse zugeordnet, also bei einer positiven ersten Überprüfung, wird eine zweite Überprüfung durchgeführt, ob ein für das Kommunikationsgerät konfigurierter IPv6-Default-Gateway erreichbar und ein dem Kommunikationsgerät zugeordnetes IPv6-Präfix an das Kommunikationsgerät übermittelt ist. Existiert weder IPv6-Default-Gateway noch IPv6-Präfix, also bei einer negativen zweiten Überprüfung, wird ein Testbetrieb des Kommunikationsgeräts eingeleitet.

Im Testbetrieb erzeugt das Kommunikationsgerät erfindungsgemäß selbstständig ein IPv6-Präfix, dem ein als on-link bezeichneter Status zugeordnet wird. Bei einem Verlassen des Testbetriebs entfernt das Kommunikationsgerät das selbstständig erzeugte IPv6-Präfix. Damit ist keine fehleranfällige Projektierungsänderung vor Beginn und nach Beendigung des Testbetriebs erforderlich. Zudem kann ein Testbetrieb einer vorprojektierten Anlage eingeleitet werden, ohne dass hierzu anwenderseitig vertieftes IPv6-Fachwissen erforderlich ist. Darüber hinaus können Probleme durch in einem Auslieferungszustand noch aktive Testkonfigurationen vermieden werden, da eine Beendigung des Testbetriebs ohne Rekonfiguration selbständig erkannt wird.

Anhand eines IPv6-Präfix, dem ein als on-link bezeichneter Status zugeordnet ist, kann ein Kommunikationsgerät andere Kommunikationsgeräte anhand deren IPv6-Adresse identifizieren, die innerhalb eines lokalen Teilnetzes durch das Kommunikationsgerät ohne Router erreichbar sind. Das im Testbetrieb selbständig erzeugte IPv6-Präfix wird entsprechend einer bevorzugten Ausgestaltung der vorliegenden Erfindung aus der manuell konfigurierten oder mittels DHCPv6 zugewiesenen IPv6-Adresse des Kommunikationsgeräts ermittelt, beispielsweise aus den höchstwertigen 64 Bit der IPv6-Adresse.

Entsprechend einer vorteilhaften Ausgestaltung der vorliegenden Erfindung wird das im Testbetrieb selbständig erzeugte IPv6-Präfix einer Funktionseinheit zur Implementierung eines Kommunikationsprotokollstapels des Kommunikationsgeräts zugeordnet. Vorzugsweise greift die Funktionseinheit zur Implementierung des Kommunikationsprotokollstapels über einen Kommunikationsnetzadapter-Treiber auf einen Kommunikationsnetzadapter des Kommunikationsgeräts zu. Dabei umfasst der Kommunikationsnetzadapter beispielsweise eine Sende- und Empfangseinheit und eine Steuerungseinheit zur Koordination eines Zugriffs auf ein Kommunikationsmedium.

Entsprechend einer weiteren vorteilhaften Ausgestaltung der vorliegenden Erfindung wird bei der ersten Überprüfung zusätzlich geprüft, ob die manuell konfigurierte oder mittels DHCPv6 zugeordnete IPv6-Adresse von einem zulässigen Bereich für eindeutige lokale Adressen oder für globale Adressen umfasst ist. Auf diese Weise können Fehlkonfigurationen zuverlässig erkannt werden.

Entsprechend einer bevorzugten Weiterbildung des erfindungsgemäßen Verfahrens wird vor einer Einleitung des Testbetriebs überprüft, wann ein dem Kommunikationsgerät zugeordnetes IPv6-Präfix zuletzt an das Kommunikationsgerät übermittelt worden ist, und bei dem der Testbetrieb erst bei Überschreiten eines vorgebbaren Zeitintervalls eingeleitet wird.

Das erfindungsgemäße Kommunikationsgerät ist zur Durchführung eines Verfahrens entsprechend vorangehenden Ausführungen vorgesehen und umfasst einen Kommunikationsnetzadapter, eine Funktionseinheit zur Implementierung eines Kommunikationsprotokollstapels und eine Adresskonfigurationseinheit. Der Kommunikationsprotokollstapel ist beispielsweise ein IP-Stack. Die Adresskonfigurationseinheit ist dazu ausgestaltet und eingerichtet, dass erste Überprüfung durchgeführt wird, ob dem Kommunikationsgerät bereits eine manuell konfigurierte oder mittels DHCPv6 zugeordnete IPv6-Adresse zugeordnet ist. Außerdem ist die Adresskonfigurationseinheit dazu ausgestaltet und eingerichtet, dass bei einer positiven ersten Überprüfung eine zweite Überprüfung durchgeführt wird, ob ein für das Kommunikationsgerät konfigurierter IPv6-Default-Gateway erreichbar und ein dem Kommunikationsgerät zugeordnetes IPv6-Präfix an das Kommunikationsgerät übermittelt ist.

Darüber hinaus ist die Adresskonfigurationseinheit erfindungsgemäß dazu ausgestaltet und eingerichtet, dass bei einer negativen zweiten Überprüfung ein Testbetrieb des Kommunikationsgeräts eingeleitet wird. Des weiteren ist die Adresskonfigurationseinheit dazu ausgestaltet und eingerichtet, dass im Testbetrieb selbstständig ein IPv6-Präfix erzeugt wird, dem ein als on-link bezeichneter Status zugeordnet wird, und dass das selbstständig erzeugte IPv6-Präfix bei einem Verlassen des Testbetriebs entfernt wird. Damit kann das erfindungsgemäße Kommunikationsgerät im Testbetrieb ohne Router genutzt werden.

Entsprechend einer vorteilhaften Ausgestaltung des erfindungsgemäßen Kommunikationsgeräts umfasst der Kommunikationsnetzadapter eine Sende- und Empfangseinheit sowie eine Steuerungseinheit zur Koordination eines Zugriffs auf ein Kommunikationsmedium. Darüber hinaus sind bzw. ist die Funktionseinheit zur Implementierung des Kommunikationsprotokollstapels bzw. die Adresskonfigurationseinheit vorzugsweise softwareimplementiert. Dies ermöglicht eine flexible Anpassung an anwendungsspezifische Rahmenbedingungen bzw. Anforderungen.

Entsprechend einer bevorzugten Ausgestaltung des erfindungsgemäßen Kommunikationsgeräts ist der Kommunikationsnetzadapter an ein Rückwandbus-System eines modularen industriellen Automatisierungsgeräts angeschlossen. Dabei kann das Kommunikationsgerät beispielsweise eine Zentraleinheit oder ein Kommunikationsmodul des modularen Automatisierungsgeräts sein.

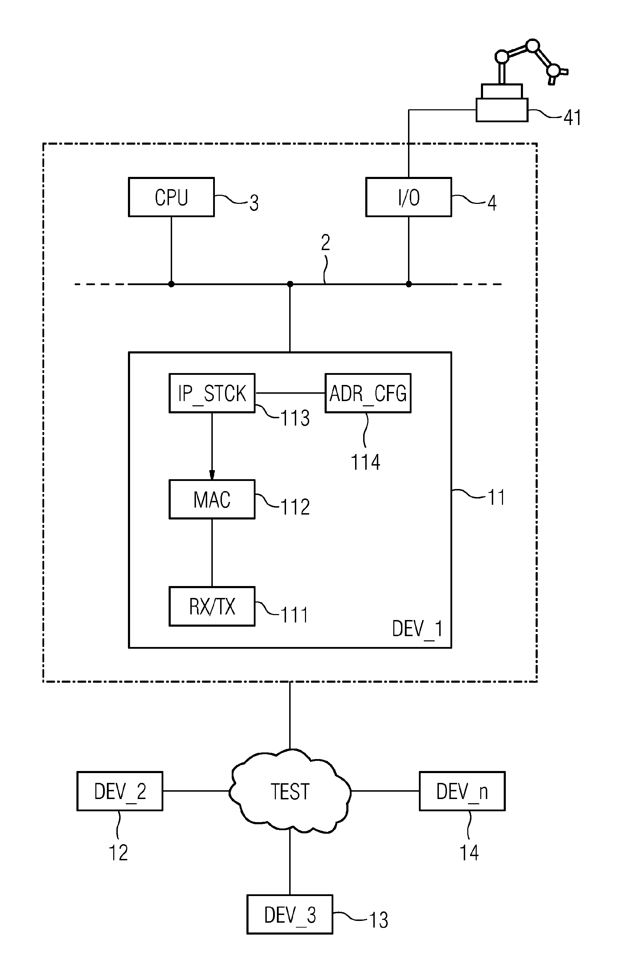

Die vorliegende Erfindung wird nachfolgend an einem Ausführungsbeispiel anhand der Zeichnung näher erläutert. Es zeigt die
- Figur: eine schematische Darstellung eines modularen industriellen Automatisierungsgeräts mit einer Adresskonfigurationseinheit zur Auto-Konfiguration von IPv6-Adressen in einem Testbetrieb.

Das in der Figur dargestellte modulare industrielle Automatisierungsgerät, beispielsweise eine speicherprogrammierbare Steuerung, umfasst ein Kommunikationsmodul 11, ein Rückwandbus-System 2, eine Zentraleinheit 3 und eine Eingabe/AusgabeEinheit 4. Das Kommunikationsmodul 11, die Zentraleinheit 3 und die Eingabe/Ausgabe-Einheit 4 sind über das Rückwandbus-System 3 miteinander verbunden. Die Eingabe/Ausgabe-Einheit 4 dient einem Austausch von Steuerungs- und Messgrößen zwischen dem industriellen Automatisierungsgerät und einer durch das Automatisierungsgerät gesteuerten Maschine oder Vorrichtung 41. Diese Maschine oder Vorrichtung 41 kann beispielsweise ein Fertigungsroboter sein.

Die Zentraleinheit 3 ist insbesondere für eine Ermittlung geeigneter Steuerungsgrößen für die Maschine oder Vorrichtung 41 aus erfassten Messgrößen vorgesehen. Über das Kommunikationsmodul 11 ist das industrielle Automatisierungsgerät über ein zugeordnetes Teilnetz 20 mit Kommunikationsgeräten oder -modulen 12-14 verbunden, die beispielsweise weiteren Automatisierungsgeräten oder Rechnereinheiten zugeordnet sein können.

Das Kommunikationsmodul 11 umfasst eine Sende- und Empfangseinheit 111 (PHY-Einheit), eine Steuerungseinheit 112 (MAC-Einheit) zur Koordination eines Zugriffs auf ein Kommunikationsmedium, eine Funktionseinheit 113 zur Implementierung eines IP-Stacks und eine Adresskonfigurationseinheit 114. Die Sende- und Empfangseinheit 111 und die Steuerungseinheit 112 zur Koordination des Zugriffs auf das Kommunikationsmedium bilden einen Kommunikationsnetzadapter, auf den die Funktionseinheit 113 zur Implementierung des IP-Stacks über einen Kommunikationsnetzadapter-Treiber zugreift. Im vorliegenden Ausführungsbeispiel sind sowohl die Funktionseinheit 113 zur Implementierung des IP-Stacks als auch die Adresskonfigurationseinheit 114 softwareimplementiert.

Die Adresskonfigurationseinheit 114 ist für eine Überprüfung ausgestaltet und eingerichtet, ob dem Kommunikationsmodul 11 bereits eine manuell konfigurierte oder mittels DHCPv6 zugewiesene IPv6-Adresse zugeordnet ist. Vorteilhafterweise wird hierbei zusätzlich geprüft, ob die manuell konfigurierte oder mittels DHCPv6 zugeordnete IPv6-Adresse von einem zulässigen Bereich für eindeutige lokale Adressen oder für globale Adressen umfasst ist und somit eine gültige Adresskonfiguration vorliegt.

Liegt keine manuell konfigurierte oder mittels DHCPv6 zugewiesene gültige IPv6-Adresse für das Kommunikationsmodul 11 vor, wird durch die Adresskonfigurationseinheit 114 weiter überprüft, ob ein für das Kommunikationsmodul 11 konfigurierter IPv6-Default-Gateway erreichbar und ein dem Kommunikationsmodul 11 zugeordnetes IPv6-Präfix an das Kommunikationsmodul 11 übermittelt ist.

Ist kein IPv6-Default-Gateway erreichbar und kein zugeordnetes IPv6-Präfix übermittelt, leitet die Adresskonfigurationseinheit 114 einen Testbetrieb des Kommunikationsmoduls 11 ein. Im Testbetrieb erzeugt die Adresskonfigurationseinheit 114 selbstständig, d.h. ohne Router-Unterstützung, ein on-link IPv6-Präfix. Dieses on-link IPv6-Präfix wird dann der Funktionseinheit 113 zur Implementierung des IP-Stacks zugeordnet. Bei einem Verlassen des Testbetriebs wird das selbstständig erzeugte IPv6-Präfix durch die Adresskonfigurationseinheit wieder automatisch aus einer Konfiguration des Kommunikationsmoduls 11 entfernt. Die Kommunikationsgeräte oder -module 12-14 weisen eine entsprechende Funktionalität wie das Kommunikationsmodul 11 des Automatisierungsgeräts auf. Somit ist beispielsweise ein Testbetrieb möglich, der auch die Kommunikationsgeräte oder -module 12-14 umfasst.

Vorzugsweise überprüft das Kommunikationsmodul 11 innerhalb des zugeordneten Teilnetzes 20 die weiteren Kommunikationsgeräte oder -module 12-14 darauf, ob zumindest einem der weiteren Kommunikationsgeräte oder -module 12-14 eine identische IPv6-Adresse wie das Kommunikationsmodul 11 zugeordnet ist. Eine Adressidentität wird im vorliegenden Ausführungsbeispiel mittels Neighbour Solicitation bzw. Neighbour Advertisement entsprechend Neighbour-Discovery-Protokoll überprüft. Liegt eine Adressidentität vor, generiert das Kommunikationsmodul 11 aus dem selbständig erzeugten IPv6-Präfix und aus einem modifizierten Geräteidentifikator automatisch eine neue Kommunikationsnetzadresse.

Vor einer Einleitung des Testbetriebs wird vorzugsweise überprüft, wann ein dem Kommunikationsmodul 11 zugeordnetes IPv6-Präfix zuletzt an das Kommunikationsmodul 11 übermittelt worden ist. Erst bei Überschreiten eines vorgebbaren Zeitintervalls wird der Testbetrieb eingeleitet.

## Patentansprüche

1. Verfahren zur Konfiguration eines Kommunikationsgeräts innerhalb eines industriellen Automatisierungssystems, bei dem
- eine erste Überprüfung, ob dem Kommunikationsgerät bereits eine manuell konfigurierte oder mittels DHCPv6 zugewiesene IPv6-Adresse zugeordnet ist, durchgeführt wird,
- bei einer positiven ersten Überprüfung eine zweite Überprüfung, ob ein für das Kommunikationsgerät konfigurierter IPv6-Default-Gateway erreichbar und ein dem Kommunikationsgerät zugeordnetes IPv6-Präfix an das Kommunikationsgerät übermittelt ist, durchgeführt wird,
- bei einer negativen zweiten Überprüfung ein Testbetrieb des Kommunikationsgeräts eingeleitet wird,
- das Kommunikationsgerät im Testbetrieb selbstständig ein IPv6-Präfix erzeugt, dem ein als on-link bezeichneter Status zugeordnet wird,
- das Kommunikationsgerät bei einem Verlassen des Testbetriebs das selbstständig erzeugte IPv6-Präfix entfernt.

2. Verfahren nach Anspruch 1,
bei dem das im Testbetrieb selbständig erzeugte IPv6-Präfix einer Funktionseinheit zur Implementierung eines Kommunikationsprotokollstapels des Kommunikationsgeräts zugeordnet wird.

3. Verfahren nach Anspruch 2,
bei dem die Funktionseinheit zur Implementierung des Kommunikationsprotokollstapels über einen Kommunikationsnetzadapter-Treiber auf einen Kommunikationsnetzadapter des Kommunikationsgeräts zugreift.

4. Verfahren nach Anspruch 3,
bei dem der Kommunikationsnetzadapter eine Sende- und Empfangseinheit und eine Steuerungseinheit zur Koordination eines Zugriffs auf ein Kommunikationsmedium umfasst.

5. Verfahren nach einem der Ansprüche 1 bis 4,
bei dem bei der ersten Überprüfung zusätzlich geprüft wird, ob die manuell konfigurierte oder mittels DHCPv6 zugeordnete IPv6-Adresse von einem zulässigen Bereich für eindeutige lokale Adressen oder für globale Adressen umfasst ist.

6. Verfahren nach einem der Ansprüche 1 bis 5,
bei dem das im Testbetrieb selbständig erzeugte IPv6-Präfix aus der manuell konfigurierten oder mittels DHCPv6 zugewiesenen IPv6-Adresse des Kommunikationsgeräts ermittelt wird.

7. Verfahren nach einem der Ansprüche 1 bis 6,
bei dem vor einer Einleitung des Testbetriebs überprüft wird, wann ein dem Kommunikationsgerät zugeordnetes IPv6-Präfix zuletzt an das Kommunikationsgerät übermittelt worden ist, und bei dem der Testbetrieb erst bei Überschreiten eines vorgebbaren Zeitintervalls eingeleitet wird.

8. Kommunikationsgerät zur Durchführung eines Verfahrens nach einem der Ansprüche 1-7 mit
- einem Kommunikationsnetzadapter,
- einer Funktionseinheit zur Implementierung eines Kommunikationsprotokollstapels und
- einer Adresskonfigurationseinheit, die dazu ausgestaltet und eingerichtet ist, dass
- eine erste Überprüfung, ob dem Kommunikationsgerät bereits eine manuell konfigurierte oder mittels DHCPv6 zugewiesene IPv6-Adresse zugeordnet ist, durchgeführt wird,
- bei einer positiven ersten Überprüfung eine zweite Überprüfung, ob ein für das Kommunikationsgerät konfigurierter IPv6-Default-Gateway erreichbar und ein dem Kommunikationsgerät zugeordnetes IPv6-Präfix an das Kommunikationsgerät übermittelt ist, durchgeführt wird,
- bei einer negativen zweiten Überprüfung ein Testbetrieb des Kommunikationsgeräts eingeleitet wird,
- im Testbetrieb selbstständig ein IPv6-Präfix erzeugt wird, dem ein als on-link bezeichneter Status zugeordnet wird,
- bei einem Verlassen des Testbetriebs das selbstständig erzeugte IPv6-Präfix entfernt wird.

9. Kommunikationsgerät nach Anspruch 8,
bei dem der Kommunikationsnetzadapter eine Sende- und Empfangseinheit sowie eine Steuerungseinheit zur Koordination eines Zugriffs auf ein Kommunikationsmedium umfasst.

10. Kommunikationsgerät nach einem der Ansprüche 8 oder 9, bei dem der Kommunikationsprotokollstapel ein IP-Stack ist.

11. Kommunikationsgerät nach einem der Ansprüche 8 bis 10, bei dem die Funktionseinheit zur Implementierung des Kommunikationsprotokollstapels und/oder die Adresskonfigurationseinheit softwareimplementiert sind/ist.

12. Kommunikationsgerät nach einem der Ansprüche 8 bis 11, bei dem der Kommunikationsnetzadapter an ein Rückwandbus-System eines modularen industriellen Automatisierungsgeräts angeschlossen ist, und bei dem das Kommunikationsgerät ist eine Zentraleinheit oder ein Kommunikationsmodul des modularen Automatisierungsgeräts ist.
